# EUROPEAN PATENT SPECIFICATION

(11) **EP 3 480 531 B1**
(45) Date of publication and mention of the grant of the patent: **05.05.2021**
(21) Application number: 18175279.1
(22) Date of filing: 31.05.2018
(51) Int. Cl.: F24H 1/06, F24H 8/00, F24H 9/06, F24H 9/00

(54) **PORTABLE HEATING APPARATUS**
TRAGBARE ERHITZUNGSVORRICHTUNG
APPAREIL DE CHAUFFAGE PORTABLE

(30) Priority: 07.11.2017 DK PA201700623
(43) Date of publication of application: 08.05.2019
(73) Proprietor: Warburg VVS, 2650 Hvidovre (DK)
(72) Inventor: Warburg, Thomas Kimmy, 2650 Hvidovre (DK)
(74) Representative: Sun, Yiming

(56) References cited:
- CN-U- 203 880 906
- DE-U1- 29 902 504
- JP-A- H05 312 401
- JP-A- 2012 184 887

## Description

### TECHNICAL FIELD OF THE INVENTION

The invention disclosed herein generally relates to a portable heating apparatus. More particularly, the invention disclosed herein relates to the portable heating apparatus with a boiler to supply heat and hot water especially in outdoor applications Document CN 203 880 906 U discloses a portable heating apparatus having the features of the preamble of claim 1.

### BACKGROUND

Hot water is an indispensable requirement for most of the people nowadays. Due to drastic climate changes, people are adapting to the conditions with the extreme need for hot water and heating systems to make themselves in their comfortable zone. There have been numerous apparatus and methods to provide hot water and heat for domestic applications such as home and public buildings. Boilers are most commonly used for this purpose to heat the water using the combustion of natural gas or oil as fuels.

Conventional boilers and hot water heaters, have been used widely for these applications. However, they have their own set of problems and limitations. Generation of heat by an electrical resistive element is very expensive and at the same time, it is very slow and inefficient. Electrical resistive elements used to heat water are subject to fouling with mineral deposits that further limits the efficiency and their useful life and leads to excessive maintenance costs.

A prior art, US8490582 of Wingen, discloses a fluid heating apparatus or system. Said apparatus has a fluid inlet, a fluid outlet, and a fluid path, and comprises a fluid pumping assembly configured to increase the pressure of the fluid on the fluid path. A heating assembly is configured to heat the fluid between the fluid inlet and outlet and forms a portion of the fluid path. A heat recovery assembly is configured to recover heat from the exhaust gases and forms a portion of the fluid path to transfer recovered heat to fluid moving through the fluid path. A collection assembly may be employed to collect condensation from exhaust gases passing through the recovery assembly.

Most of the boilers use a plurality of tanks and a combustion unit in a complex design to supply hot water and heat. However, the systems are not energy efficient and not user-friendly. When it comes to outdoor applications, these systems are extremely important to supply hot water or heat. Because, at festival pitches, camping and mobile bathing units, the requirement for hot water is challenging. Along with that, the need for providing radiant heat transfer for a surrounding space near the camping areas is another factor which determines the degree of comfort for the people.

Hence, there is a long-felt need for an energy efficient portable heating apparatus with a boiler that is easily maneuverable to supply both heat and hot water in outdoor applications such as festival pitches, camping and so on.

### SUMMARY OF THE INVENTION

This summary is provided to introduce a selection of concepts in a simplified form that are further disclosed in the detailed description of the invention. This summary is not intended to identify key or essential inventive concepts of the claimed subject matter, nor is it intended for determining the scope of the claimed subject matter.

According to the present invention, a portable heating apparatus to supply a predetermined amount of heat and hot water is disclosed in claim 1. The portable heating apparatus comprises a condensing boiler comprising an inlet port to receive the water from any external supply unit, wherein a central heating system is configured to heat the water to a predefined temperature. A storage container is configured to receive the predetermined amount of hot water from the condensing boiler via a connecting pipe raised by a central pump, wherein the storage container is configured to constantly heat the hot water and routes the hot water to a radiator section via a distribution line for heating a surrounding space.

According to the invention, the central pump and the central heating system in the portable heating apparatus are powered by a solar module. The condensing boiler and the storage container are mounted on a frame and maneuvered on a plane surface using a handle and a wheel assembly.

Other objects, features and advantages of the present invention will become apparent from the following detailed description.

### BRIEF DESCRIPTION OF THE DRAWINGS

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.
FIG. 1 exemplarily illustrates a perspective view of a portable heating apparatus to supply heat and hot water, incorporating the aspects of the present invention.
FIG. 2 exemplarily illustrates a rear view of a portable heating apparatus to supply heat and hot water, incorporating the aspects of the present invention.

### DETAILED DESCRIPTION OF THE INVENTION

Disclosed herein, a portable heating apparatus 100. Further, the invention disclosed herein relates to a portable heating apparatus to supply a predetermined amount of heat and hot water primarily in outdoor applications.

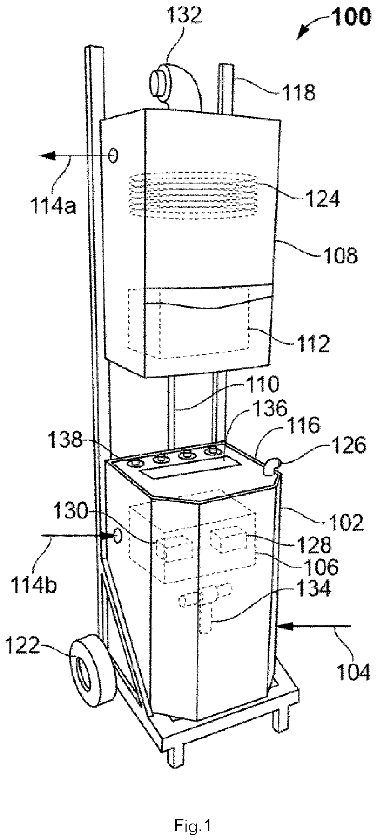

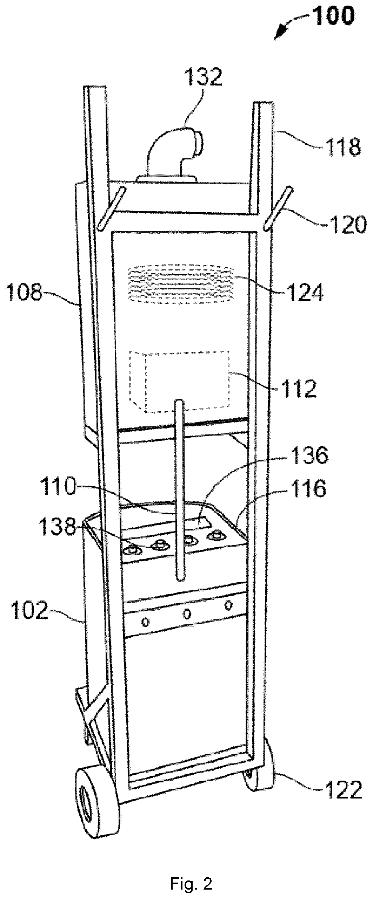

FIG. 1 exemplarily illustrates a perspective view of the portable heating apparatus 100. The portable heating apparatus 100 comprises a condensing boiler 102 comprising an inlet port 104 to receive the water from any external supply unit, wherein a central heating system 106 is configured to heat the water to a predefined temperature. A storage container 108 is configured to receive the predetermined amount of hot water from the condensing boiler 102 via a connecting pipe 110 raised by a central pump 112. The storage container 108 is a tank configured to constantly heat the hot water and routes the hot water to a radiator section via a first distribution line 114a for heating a surrounding space. The condensing boiler 102 and the storage container 108 are mounted on a frame 118 and maneuvered on a plane surface using a handle 120 and a wheel assembly 122 so that the portable heating apparatus 100 could be easily get into all doorways and easy to move with less effort as shown in FIG. 2.

According to FIG. 1, the portable heating apparatus 100 comprises two distribution lines (114a, 114b). A first distribution line 114a is configured to send the hot water from the storage container 108 to the radiator section for heating the surrounding space and a second distribution line 114b is configured to route the cold water from the radiator section back to the condensing boiler 102 for heating once the radiative heat transfer to the surrounding space is completed. The use of condensing boilers 102 allows the portable heating apparatus 100 to operate at maximum efficiency as they condense the water vapor in the exhausting gases and recover the latent heat of vaporization.

As shown in FIG. 1, the central pump 112 is a key component in the storage container 108 to lift the hot water from the condensing boiler 102. It is also used as hot water circulating pump to discharge hot water through the first distribution line 114a to the radiator section for heating the surrounding space. The storage container 108 further comprises one or more spiral heating elements 124 to constantly heat the hot water received from the condensing boiler 102. The spiral heating elements 124 are coils powered by the solar module 116 to heat the hot water from the condensing boiler 102 at optimal temperature. The connecting pipe 110 is attached between the condensing boiler 102 and the storage container 108 to allow the movement of hot water.

As shown in FIG. 1, the central pump 112 and the central heating system 106 are powered by the solar module 116. The solar module 116 comprises a deployable panel containing one or more solar panels that are removably attached side to side. These solar panels get charged during the day time and uses an electrical configuration to store the energy in a battery positioned in the central heating system 106. In different embodiments, the portable heating apparatus 100 is connected to a generator to power at least one of the central pump 112, an electric lighter 130 and a display unit 136 in any emergency situations. A hot water exit pipe 126 is also provided in the condensing boiler 102 to allow the discharge of hot water if desired by the user.

In another embodiment as shown in FIG. 1, the portable heating apparatus 100 is supplied with an energy source such as propane gas. Propane gas in bottled cylinders containing about 11 kg could be used with full consumption. In case, if the requirement of the portable heating apparatus 100 is minimal, the bottled gas would come for 3 to 4 days of consumption. The central heating system 106 comprises a thermal burner 128 in the condensing boiler 102 configured to heat the water using the electric lighter 130. The thermal burner 128 is configured to burn the gas supplied from the cylinders and combustion happens inside the central heating system 106 to heat the cold water coming via the inlet port 104. The central heating system 106 also uses a heat exchanger which is a helical coil disposed in the annular space of the condensing boiler 102. This heat exchanger transfers the combustion heat to the water as a result of which the water gets heated up to the desired temperature. A smoke exhaust port 132 is mounted on the portable heating apparatus 100 to direct the exhaust emissions outside.

As shown in FIG. 1, the central heating system 106 of the portable heating apparatus 100 uses the electric lighter 130 to provide ignition for the combustion of the gas to heat the water in the condensing boiler 102. The electric lighter 130 is controlled using a three-way valve 134 to selectively choose the supply of the heat and the hot water. Further, the display unit 136 is provided in the condensing boiler 102 to indicate the status of the temperature at which the water is heated. One or more push buttons 138 are installed in the condensing boiler 102 to allow the user to select functionalities such as increasing and decreasing the temperature to heat the water, adjusting the three-way valve 134 to selectively choose the supply of the heat and the hot water from the portable heating apparatus 100 and selecting the power supply from either the solar module 116 or the generator.

As shown in FIG. 2, the frame 118 is configured to carry the condensing boiler 102 and the storage container 108, and it is made from a steel material. The storage container 108 is made configured to receive and store up to 70 liters. However, the size of the storage container 108 could be made in different configuration to suit the requirements of the portable heating apparatus 100. The handle 120 is provided in the frame 118 to allow the user to conveniently move the portable heating apparatus 100 into doorways. The wheel assembly 122 having a set of wheels is configured at a rear end of the frame 118 so that with the help of the handle 120, anyone could easily pull or push the portable heating apparatus 100 carrying the condensing boiler 102 and the storage container 108. The inlet and exit ports are easy to mount either vertically or horizontally. When the condensing boiler 102 and the storage container 108 are put into operation together, it could provide 300 liters of hot water per hour and it could produce hot water to any set radiators to provide heat to the surrounding area.

The portable heating apparatus 100, according to the present invention, is convenient and easy to use at festival pitches, camping, and other outdoor applications or anywhere with the need for mobile bathing units with hot water facilities. It could be used in houses with damages where it can supply heat and hot water to the entire premises where damage has occurred. The apparatus 100 is also configured to benefit the construction sites, where there is no electricity or any other source of energy. The solar module 116 in the apparatus 100 is configured to supply power from the energy stored during daylight time and this makes the apparatus energy efficient. The three-way valve 134 in the condensing boiler 102 allows the user to selectively choose the heat or hot water from the apparatus 100 based on the requirements. This is easy to use and does not require any skilled person to operate the apparatus 100.

## Claims

1. A portable heating apparatus (100) adapted to supply a predetermined amount of heat and hot water, the portable heating apparatus (100) comprising:
- a condensing boiler (102) comprising an inlet port (104) configured to receive water from an external supply unit, wherein the condensing boiler (102) comprises a central heating system (106) configured to heat the received water to a predefined temperature;
- a connecting pipe (110) and a central pump (112) connected to the connecting pipe (110); and
- a frame (118) onto which frame the condensing boiler (102) is mounted, wherein said frame (118) comprises a handle (120) and a wheel assembly (122) for maneuvering the frame (118) on a planar surface,
- a solar module (116) powering the central heating system (106) and the central pump (112),
**characterized in that** the portable heating apparatus (100) further comprises:
- a storage container (108) mounted on the frame (118) and configured to receive a predetermined amount of hot water from the condensing boiler (102) via the connecting pipe (110), wherein the hot water is circulated by the central pump (112) between the condensing boiler (102) and the storage container (108), and wherein the storage container (108) is configured to constantly heat the hot water, and
- a radiator section connected to the storage container (108) by a first distribution line (114a) and to the condensing boiler (102) by a second distribution line (114b), for routing hot water to the radiator section for heating a surrounding space.

2. The portable heating apparatus (100) of claim 1, wherein the central heating system (106) comprises a thermal burner (128) in the condensing boiler (102) configured to heat the water using an electric lighter (130).

3. The portable heating apparatus (100) of claim 2, wherein the thermal burner (128) in the condensing boiler (102) is configured to heat the water using a source of propane gas combusted with the electric lighter (130).

4. The portable heating apparatus (100) of claim 2, wherein the electric lighter (130) is controlled using a three-way valve (134) to selectively choose the supply of the heat and the hot water.

5. The portable heating apparatus (100) of claim 1, wherein the condensing boiler (102) comprises a display unit (136) to indicate the status of the temperature at which the water is heated in the condensing boiler (102).

6. The portable heating apparatus (100) of claim 1, wherein the condensing boiler (102) is configured to receive the cooled water returning from the second distribution line (114b) once the radiative heat transfer to the surrounding space is completed.

7. The portable heating apparatus (100) of claim 1, wherein the storage container (108) is configured to have one or more spiral heating elements (124) to constantly heat the hot water received from the condensing boiler (102).

8. The portable heating apparatus (100) of claim 1, wherein the condensing boiler (102) and the storage container (108) are connected to a generator to power at least one of the central pump (112), the electric lighter (130) and the display unit (136).

9. The portable heating apparatus (100) of claim 1, wherein the frame (118) is made of steel material.

10. The portable heating apparatus (100) of claim 1, further comprising a smoke exhaust port (132) to direct the exhaust emissions outside.

## Patentansprüche

1. Transportable Heizvorrichtung (100), die dazu ausgelegt ist, eine vorgegebene Menge an Wärme und Heißwasser bereitzustellen, wobei die transportable Heizvorrichtung (100) umfasst:
- einen Brennwertkessel (102), der eine Einlassöffnung (104) umfasst, die dazu ausgestaltet ist, Wasser von einer externen Zufuhreinheit zu empfangen, wobei der Brennwertkessel (102) ein zentrales Heizsystem (106) umfasst, das dazu ausgestaltet ist, das empfangene Wasser auf eine vorgegebene Temperatur zu erhitzen;
- eine Verbindungsleitung (110) und eine zentrale Pumpe (112), die mit der Verbindungsleitung (110) verbunden ist; und
- ein Gestell (118), auf dem der Brennwertkessel (102) befestigt ist, wobei das Gestell (118) einen Griff (120) und eine Radbaugruppe (122) zum Manövrieren des Gestells (118) auf einer ebenen Fläche umfasst,
- ein Solarmodul (116), welches das zentrale Heizsystem (106) und die zentrale Pumpe (112) mit Strom versorgt,
**dadurch gekennzeichnet, dass** die transportable Heizvorrichtung (100) ferner umfasst:
- einen Vorratsbehälter (108), der auf dem Gestell (118) befestigt und dazu ausgestaltet ist, über die Verbindungsleitung (110) eine vorgegebene Menge an Heißwasser von dem Brennwertkessel (102) zu empfangen, wobei das Heißwasser durch die zentrale Pumpe (112) zwischen dem Brennwertkessel (102) und dem Vorratsbehälter (108) im Kreis geführt wird und wobei der Vorratsbehälter (108) dazu ausgestaltet ist, das Heißwasser konstant zu erhitzen, und
- einen Radiatorabschnitt, der über eine erste Verteilungsleitung (114a) mit dem Vorratsbehälter (108) und über eine zweite Verteilungsleitung (114b) mit dem Brennwertkessel (102) verbunden ist, zum Leiten von Heißwasser zu dem Radiatorabschnitt zum Beheizen eines umgebenden Raumes.

2. Transportable Heizvorrichtung (100) nach Anspruch 1, wobei das zentrale Heizsystem (106) einen Thermobrenner (128) in dem Brennwertkessel (102) umfasst, der dazu ausgestaltet ist, das Wasser unter Nutzung eines elektrischen Anzünders (130) zu erhitzen.

3. Transportable Heizvorrichtung (100) nach Anspruch 2, wobei der Thermobrenner (128) in dem Brennwertkessel (102) dazu ausgestaltet ist, das Wasser unter Nutzung einer Propangasquelle, die mit dem elektrischen Anzünder (130) verbrannt wird, zu erhitzen.

4. Transportable Heizvorrichtung (100) nach Anspruch 2, wobei der elektrische Anzünder (130) unter Nutzung eines Dreiwegeventils (134) gesteuert wird, um die Bereitstellung der Wärme und des Heißwassers selektiv auszuwählen.

5. Transportable Heizvorrichtung (100) nach Anspruch 1, wobei der Brennwertkessel (102) eine Anzeigeeinheit (136) umfasst, um den Status der Temperatur, mit der das Wasser in dem Brennwertkessel (102) erhitzt wird, anzuzeigen.

6. Transportable Heizvorrichtung (100) nach Anspruch 1, wobei der Brennwertkessel (102) dazu ausgestaltet ist, das abgekühlte Wasser, das von der zweiten Verteilungsleitung (114b) zurückfließt, zu empfangen, wenn die Strahlungswärmeübertragung an den umgebenden Raum abgeschlossen ist.

7. Transportable Heizvorrichtung (100) nach Anspruch 1, wobei der Vorratsbehälter (108) so ausgestaltet ist, dass er ein oder mehrere spiralförmige Heizelemente (124) aufweist, um das Heißwasser, das von dem Brennwertkessel (102) empfangen wird, konstant zu erhitzen.

8. Transportable Heizvorrichtung (100) nach Anspruch 1, wobei der Brennwertkessel (102) und der Vorratsbehälter (108) mit einem Generator verbunden sind, um wenigstens eines aus der zentralen Pumpe (112), dem elektrischen Anzünder (130) und der Anzeigeeinheit (136) mit Strom zu versorgen.

9. Transportable Heizvorrichtung (100) nach Anspruch 1, wobei das Gestell (118) aus Stahlmaterial hergestellt ist.

10. Transportable Heizvorrichtung (100) nach Anspruch 1, die ferner eine Rauchabzugsöffnung (132) umfasst, um die Abgasemissionen nach außen zu leiten.

## Revendications

1. Appareil de chauffage portable (100) adapté pour fournir une quantité prédéterminée de chaleur et d'eau chaude, l'appareil de chauffage portable (100) comprenant :
- une chaudière à condensation (102) comprenant un orifice d'entrée (104) configuré pour recevoir de l'eau provenant d'une unité d'alimentation externe, dans lequel la chaudière à condensation (102) comprend un système de chauffage central (106) configuré pour chauffer l'eau reçue à une température prédéfinie ;
- un tuyau de connexion (110) et une pompe centrale (112) connectée au tuyau de connexion (110) ; et
- un châssis (118) sur lequel la chaudière à condensation (102) est montée, dans lequel ledit châssis (118) comprend une poignée (120) et un ensemble de roues (122) pour manœuvrer le châssis (118) sur une surface plane,
- un module solaire (116) qui alimente le système de chauffage central (106) et la pompe centrale (112),
**caractérisé en ce que** l'appareil de chauffage portable (100) comprend en outre :
- un réservoir de stockage (108) monté sur le châssis (118) et configuré pour recevoir une quantité prédéterminée d'eau chaude provenant de la chaudière à condensation (102) via le tuyau de connexion (110), dans lequel l'eau chaude est mise en circulation par la pompe centrale (112) entre la chaudière à condensation (102) et le réservoir de stockage (108), et dans lequel le réservoir de stockage (108) est configuré pour chauffer constamment l'eau chaude, et
- une section de radiateur connectée au réservoir de stockage (108) par une première ligne de distribution (114a) et à la chaudière à condensation (102) par une deuxième ligne de distribution (114b), pour acheminer de l'eau chaude à la section de radiateur afin de chauffer un espace environnant.

2. Appareil de chauffage portable (100) selon la revendication 1, dans lequel le système de chauffage central (106) comprend un brûleur (128) dans la chaudière à condensation (102) configuré pour chauffer l'eau en utilisant un chauffage électrique (130).

3. Appareil de chauffage portable (100) selon la revendication 2, dans lequel le brûleur (128) dans la chaudière à condensation (102) est configuré pour chauffer l'eau en utilisant une source de gaz propane brûlé par le chauffage électrique (130).

4. Appareil de chauffage portable (100) selon la revendication 2, dans lequel le chauffage électrique (130) est contrôlé en utilisant une vanne trois voies (134) pour sélectionner l'alimentation de chaleur et l'eau chaude.

5. Appareil de chauffage portable (100) selon la revendication 1, dans lequel la chaudière à condensation (102) comprend une unité d'affichage (136) pour indiquer l'état de la température à laquelle l'eau est chauffée dans la chaudière à condensation (102).

6. Appareil de chauffage portable (100) selon la revendication 1, dans lequel la chaudière à condensation (102) est configurée pour recevoir l'eau refroidie revenant par la deuxième ligne de distribution (114b) une fois que le transfert de chaleur rayonnante à l'espace environnant est effectué.

7. Appareil de chauffage portable (100) selon la revendication 1, dans lequel le réservoir de stockage (108) est configuré pour comporter un ou plusieurs éléments de chauffage en spirale (124) pour chauffer constamment l'eau chaude reçue de la chaudière à condensation (102).

8. Appareil de chauffage portable (100) selon la revendication 1, dans lequel la chaudière à condensation (102) et le réservoir de stockage (108) sont connectés à un générateur pour alimenter au moins un élément parmi la pompe centrale (112), le chauffage électrique (130) et l'unité d'affichage (136).

9. Appareil de chauffage portable (100) selon la revendication 1, dans lequel le matériau du châssis (118) est de l'acier.

10. Appareil de chauffage portable (100) selon la revendication 1, comprenant en outre un orifice d'échappement de fumée (132) pour envoyer les émissions d'échappement à l'extérieur.
